# EUROPÄISCHE PATENTSCHRIFT

(11) **EP 3 415 362 B1**
(45) Veröffentlichungstag und Bekanntmachung des Hinweises auf die Patenterteilung: **18.01.2023**
(21) Anmeldenummer: 18172224.0
(22) Anmeldetag: 15.05.2018
(51) Int. Cl.: B60L 53/16, B60L 53/60, B60L 53/00

(54) **VERFAHREN ZUM BETREIBEN EINER ELEKTRISCHEN LADESTEUERVORRICHTUNG UND KRAFTFAHRZEUG MIT EINER ELEKTRISCHEN LADESTEUERVORRICHTUNG**
METHOD FOR OPERATING AN ELECTRIC CHARGING CONTROL UNIT AND MOTOR VEHICLE COMPRISING AN ELECTRIC CHARGING CONTROL UNIT
PROCÉDÉ DE COMMANDE D'UN DISPOSITIF DE COMMANDE DE CHARGE ÉLECTRIQUE ET VÉHICULE AUTOMOBILE DOTÉ D'UN DISPOSITIF DE COMMANDE DE CHARGE ÉLECTRIQUE

(30) Priorität: 26.05.2017 DE 102017208895
(43) Veröffentlichungstag der Anmeldung: 19.12.2018
(73) Patentinhaber: VOLKSWAGEN AKTIENGESELLSCHAFT, 38440 Wolfsburg (DE)
(72) Erfinder: Ulrich, Axel, 38124 Braunschweig (DE); Greskamp, Christoph, 38102 Braunschweig (DE)

(56) Entgegenhaltungen:
- EP-A1- 2 048 762
- EP-A1- 3 024 687
- EP-A2- 0 697 680
- WO-A2-2011/156776
- DE-A1-102015 102 839
- DE-A1-102015 200 997
- US-A1- 2010 121 507
- US-A1- 2012 083 148
- US-A1- 2014 170 879

## Beschreibung

Die Erfindung betrifft ein Verfahren zum Betreiben einer elektrischen Ladesteuervorrichtung eines elektrischen Kraftfahrzeugs. Die Erfindung betrifft weiterhin ein elektrisches Kraftfahrzeug mit einer elektrischen Ladesteuervorrichtung.

Zum Laden einer Batterie eines elektrischen Kraftfahrzeugs an einer Ladesäule ist eine Kommunikation zwischen dem Kraftfahrzeug und der Ladesäule notwendig. Gemäß CCS-Standard (Combined Charging System) muss ein Ladekommunikationschip, der ein PLC-Chip (Powerline-Kommunikationschip) sein kann, in das elektrische Kraftfahrzeug integriert werden. Um eine Erhöhung der Lebensdauer von Bauteilen zu gewährleisten und unnötige elektromagnetische Störstrahlung oder EMV-Störstrahlung, die entgegen Normen der elektromagnetischen Verträglichkeit (EMV) steht, zu vermeiden, wird der Ladekommunikationschip abgeschaltet, wenn er nicht benötigt wird. Konkret bedeutet das, dass der Ladekommunikationschip abgeschaltet werden sollte, sobald kein Ladestecker am elektrischen Kraftfahrzeug erkannt wird, also keine Verbindung über ein Ladekabel zwischen dem elektrischen Kraftfahrzeug und einer Ladesäule besteht. Die Aktivierung eines Ladekommunikationschips der Ladesteuervorrichtung des elektrischen Kraftfahrzeugs erfolgt erfindungsgemäß in Situationen, in denen der Ladekommunikationschip zum Steuern eines Ladevorgangs benötigt wird.

Aus der DE 10 2011 056 501 A1 ist ein Verfahren zur Erkennung eines Zustands einer Verbindung zwischen einem elektrisch angetriebenen Kraftfahrzeug und einer entsprechenden Ladestation bekannt. Dabei wird eine Länge einer "Control-Pilot"-Leitung zwischen Kraftfahrzeug und Ladestation gemessen. Diese wird mittels einer Signallaufzeit ermittelt. Das Verfahren erkennt also, ob ein Ladestecker einer Leitung am elektrischen Kraftfahrzeug eingesteckt ist.

Aus der DE 10 2011 076 451 A1 ist eine Verriegelung eines Fahrzeugs bekannt, um Beschädigungen eines zum Laden eines Elektrofahrzeugs verwendeten Kabelsatzes zu verhindern, wenn das Fahrzeug weggefahren wird, während der Kabelsatz angeschlossen ist. Ein Kabelsatzindikator, der anzeigt ob der Kabelsatz angeschlossen ist, kann eine Detektion des Steckers sein, der mit einer Aufnahme im Kraftfahrzeug gekoppelt ist. Ein Kabelsatzindikator kann auch ein Schalter sein, wobei ein Signal des Schalters anzeigt, ob eine Ladeklappe des Kraftfahrzeugs offen oder geschlossen ist. Das Fahrzeug wird gesperrt, wenn ein positives Ergebnis von einem Kabelsatzindikator detektiert wird, während das Fahrzeug deaktiviert ist.

Aufgrund einer Initialisierungszeit des Ladekommunikationschips bei seiner Aktivierung ergibt sich für einen Nutzer beim Start eines Ladevorgangs eine gewisse Wartezeit. Erst nachdem der Ladekommunikationschip aktiviert ist, kann der Nutzer ein Feedback über einen Ladestart des Ladevorganges bekommen, sodass er während der Initialisierungszeit auf das Feedback warten muss. Wenn ein Ladekommunikationschip dauerhaft aktiviert ist, sodass sich keine Wartezeit für den Nutzer ergibt, ergeben sich dagegen Probleme bezüglich einer geringeren Lebensdauer von Bauteilen oder Probleme bezüglich EMV-Störstrahlung.

Die US 2010/0121507 A1 betrifft eine Steuervorrichtung und ein Steuerverfahren für ein Kraftfahrzeug. Dabei weist das Steuergerät einen Kopplungsbestimmungssensor zum Erfassen eines externen Anschlusses eines Ladegeräts auf. Wenn die Verbindung des Ladekabels anhand eines Signals vom Sensor erkannt wird, aktiviert die Steuervorrichtung ein elektrisches Gerät, das an eine Kommunikationsleitung eines für Ladezeiten bestimmten Stromversorgungssystems angeschlossen ist. Da die Steuervorrichtung nur die elektrische Vorrichtung aktivieren kann, die sich auf das Laden bezieht, während elektrische Vorrichtungen, die sich nicht auf das Laden beziehen, in Ruhe gehalten werden, wird ein verschwenderischer elektrischer Energieverbrauch vermieden. Die Steuervorrichtung weist mehrere Kommunikationsleitungen auf und überträgt Daten, den Ladezustand betreffend.

Die EP 0 697 680 A2 stellt ein Kommunikationssystem bereit, um genau zu erfassen, wann ein mobiler Sendeempfänger in einen Bereich eingetreten ist, in dem eine Kommunikation mit einem festen Sendeempfänger möglich ist. Um eine interne Schaltung des mobilen Sendeempfängers zu starten, sendet das Kommunikationssystem ein Start-Pilotsignal eines vorgeschriebenen Zeitrahmens von einem in einer festen Station montierten Transponder zu einem in einem Fahrzeug montierten Transponder. In dem Transponder wird das empfangene Signal beim Empfangen durch eine Antenne in einem Detektor erfasst und in einem Verstärker verstärkt. Wenn dieses Signal größer als eine Referenzspannung ist, wird ein Impuls von einem Pegeldiskriminator ausgegeben. In diesem Zusammenhang lehrt diese Druckschrift einen Kommunikationschip in einem Fahrzeug bei Einfahrt in den Empfangsbereich einer Bodenstation zu aktivieren.

Aus der WO 2011/156776 A2 ist es bekannt, dass ein Expertensystem ein Stromnetz verwaltet, in dem Ladestationen an das Stromnetz angeschlossen sind, wobei Elektrofahrzeuge an die Ladestationen angeschlossen sind, wobei das Expertensystem Strom von angeschlossenen Elektrofahrzeugen über einen Wechselrichter selektiv in das Stromnetz innerhalb der Ladestationen zurückspeist. Dabei kann eine Applikation auf einem Mobilfunkgerät zum Starten und Verwalten von Ladevorgängen genutzt werden.

Aufgabe der Erfindung ist es, ein Verfahren zum Betreiben einer elektrischen Ladesteuervorrichtung bereitzustellen, bei dem ein Ladekommunikationschip so aktiviert wird, dass die oben genannten Probleme einer dauerhaften Aktivierung vermieden werden und unnötige elektromagnetische Störstrahlung oder EMV-Störstrahlung verringert wird sowie ein Nutzer, der das elektrische Kraftfahrzeug laden will, gleichzeitig schneller ein Feedback über einen Ladestart bekommen kann und somit eine Wartezeit des Nutzers verringert wird.

Die Aufgabe wird erfindungsgemäß gelöst gemäß den unabhängigen Patentansprüchen.

Vorteilhafte Weiterbildungen sind in etwaigen abhängigen Patentansprüchen, der folgenden Beschreibung sowie den Figuren beschrieben.

Die Erfindung stellt ein Verfahren zum Betreiben einer elektrischen Ladesteuervorrichtung eines elektrischen Kraftfahrzeugs bereit. Ein elektrisches Kraftfahrzeug kann dabei ein rein elektrisch betriebenes Kraftfahrzeug mit einer Batterie und einem Elektromotor sein oder ein Hybridfahrzeug mit zusätzlichem Verbrennungsmotor. Die Ladesteuervorrichtung steuert zumindest einen Ladevorgang einer Batterie des elektrischen Kraftfahrzeugs mittels eines Ladekommunikationschips. Die Batterie ist dabei eine Batterie, die eine elektrische Energie zum Betreiben eines Elektromotors des Kraftfahrzeugs bereitstellt, durch den das Kraftfahrzeug angetrieben wird. Für einen Ladevorgang wird ein Ladekabel mit einem Ladestecker in eine Ladeklappe des Kraftfahrzeugs eingesteckt. Über das Ladekabel kann bei einem Ladevorgang elektrische Energie von einer Ladesäule in die Batterie des Kraftfahrzeugs übertragen werden. Die Ladebuchse des Kraftfahrzeugs weist dabei eine Ladeklappe auf. Bei einer geschlossenen Ladeklappe, also einem geschlossenen Öffnungszustand der Ladeklappe, ist die Ladebuchse geschützt, d.h. sie ist so über der Ladebuchse angebracht, dass diese insbesondere von außen nicht zugänglich ist und/oder gegen beispielsweise Witterungseinflüsse geschützt ist. Bei einer geöffneten Ladeklappe, also einem geöffneten Öffnungszustand, ist es dagegen möglich, für einen Ladevorgang den Ladestecker in die Ladebuchse einzustecken.

Gemäß der Erfindung wird der Ladekommunikationschip dann aktiviert, wenn die Ladeklappe geöffnet wird und der Ladekommunikationschip beim Öffnen der Ladeklappe deaktiviert war. Beispielsweise ist in einem Betriebszustand des Kraftfahrzeugs, etwa während eines Fahrens des Kraftfahrzeugs, der Ladekommunikationschip deaktiviert. Wenn ein Nutzer das Kraftfahrzeug beispielsweise an einer Ladesäule parkt und einen Ladevorgang starten will, öffnet der Nutzer dazu die Ladeklappe des Kraftfahrzeugs, um das Ladekabel anschließen zu können. Da der Ladekommunikationschip in dem Moment aktiviert wird, in dem der Nutzer die Ladeklappe öffnet, fällt die Initialisierungszeit des Ladekommunikationschips, die beim Aktivieren des Ladekommunikationschips anfällt, in einen Zeitraum, in dem der Nutzer beispielsweise ein Ladekabel zunächst mit einem Anschluss an der Ladesäule und dann mit der Ladebuchse des Kraftfahrzeugs verbindet. Normalerweise dauert so ein Steckvorgang des Ladekabels länger, als die Initialisierungszeit des Ladekommunikationschip beträgt. Der Vorteil daran ist, dass der Nutzer sofort dann, wenn er das Ladekabel sowohl mit der Ladesäule als auch mit dem Kraftfahrzeug verbunden hat, ein Feedback bekommen kann, beispielsweise, dass der Ladevorgang erfolgreich gestartet hat. Somit wird eine Wartezeit für den Nutzer, bis er das entsprechende Feedback bekommt vermieden oder zumindest verringert. Die Zeit bis zu einem Feedback der Ladesteuervorrichtung an den Nutzer ist also kürzer als eine Handlungszeit des Nutzers, in der er den Ladestecker einsteckt, oder wenigstens kürzer als bei einem Aktivieren des Ladekommunikationschips erst bei einem Einstecken des Ladekabels.

Ein Öffnen der Ladeklappe wird zumindest mittels einer dafür vorgesehenen Erkennungseinrichtung erkannt. Diese gibt einen Öffnungszustand der Ladeklappe in zumindest einem erzeugten Erkennungssignal aus. Das Erkennungssignal kann dazu verwendet werden, ein Öffnen der Ladeklappe zu erkennen. Beispielsweise hat das Erkennungssignal bei einem geschlossenen Öffnungszustand der Ladeklappe einen ersten Wert und bei einem geöffneten Öffnungszustand der Ladeklappe einen zweiten Wert. Ein Öffnen der Ladeklappe liegt dann vor, wenn der Wert des Erkennungssignals vom ersten auf den zweiten Wert übergeht. Damit kann das Erkennungssignal dazu verwendet werden, zu erkennen, ob der Nutzer die Ladeklappe des Kraftfahrzeugs öffnet und in dem Moment, in dem ein Nutzer die Ladeklappe des Kraftfahrzeugs öffnet, kann der Ladekommunikationschip aktiviert werden, sodass er einen vom Nutzer erwarteten Ladevorgang steuern kann.

Nicht im Schutzbereich der Ansprüche liegt eine Vorgehensweise, bei der der Ladekommunikationschip bereits vor einem Öffnen der Ladeklappe aktiviert wird, wenn erkannt wird, dass ein Nutzer einen Ladevorgang innerhalb einer vorbestimmten Zeit voraussichtlich vornehmen wird. Dazu wird der Ladekommunikationschip aktiviert, wenn zwischen dem Kraftfahrzeug und zumindest einer vorbekannten Ladesäule eine Funkverbindung detektiert wird. In dem Fall, dass bei einer solchen Detektion der Ladekommunikationschip deaktiviert war, wird der Ladekommunikationschip aktiviert. Der Ladekommunikationschip bleibt dann bei einem Öffnen der Ladeklappe aktiviert. Ein Kraftfahrzeug kann so eingerichtet sein, dass es mit vorbekannten Ladesäulen, also mit Ladesäulen an denen das Kraftfahrzeug bereits einmal geladen wurde, automatisch eine Funkverbindung eingeht. Die Funkverbindung kann direkt zwischen der Ladesäule und beispielsweise einem Bordcomputer des Kraftfahrzeugs bestehen oder zwischen einem Mobiltelefon eines Nutzers des Kraftfahrzeugs, wobei das Mobiltelefon über eine weitere Funkverbindung, zum Beispiel eine Bluetooth-Verbindung oder eine WLAN-Verbindung mit dem Bordcomputer des Kraftfahrzeugs verbunden ist. Die vorbestimmte Zeit kann eine Zeitdauer sein, in der ein Nutzer nach einem Heranfahren und einer damit einhergehenden Funkverbindung mit einer Ladesäule normalerweise einen Ladevorgang startet, etwa eine Minute oder ein Wert, der an die Gewohnheiten des Nutzers angepasst wird. Der Vorteil ist, dass der Ladekommunikationschip bereits vor dem Öffnen der Ladeklappe aktiviert wird und somit gewährleistet ist, dass die Initialisierungszeit des Kommunikationschips auch dann abgelaufen ist, wenn ein Nutzer für einen Ladevorgang nach dem Öffnen der Ladeklappe das Ladekabel mit dem Ladestecker besonders schnell, das bedeutet innerhalb einer Zeit, die geringer ist als die Initialisierungszeit, in die Ladebuchse des Kraftfahrzeugs einsteckt. Auch in diesem Fall ist gewährleistet, dass sich keine Wartezeit für den Nutzer ergibt und dieser sofort ein Feedback über den Start des Ladevorgangs bekommen kann.

Nicht im Schutzbereich der Ansprüche liegt eine Vorgehensweise, bei der der Ladekommunikationschip bereits zeitlich vor dem Öffnen der Ladeklappe aktiviert wird, und zwar, wenn ein Parkvorgang des Kraftfahrzeugs innerhalb eines vorbestimmten Bereiches detektiert wird. Ein Parkvorgang liegt beispielsweise dann vor, wenn das Kraftfahrzeug mit einer geringer werdenden Geschwindigkeit in den vorbestimmten Bereich gefahren wird und im vorbestimmten Bereich abgestellt wird. Der vorbestimmte Bereich kann zum Beispiel von einem Nutzer eingestellt werden und ein Bereich sein, in dem der Nutzer normalerweise sein Kraftfahrzeug lädt. Zum Beispiel ist dieser Bereich eine Garage des Nutzers oder ein Parkplatz, an dem der Nutzer Zugang zu einer Ladesäule hat. Der vorbestimmte Bereich kann auch mehrere voreingestellte Bereiche enthalten, an denen jeweils öffentlich zugängliche Ladesäulen bereitgestellt sind. Dadurch ergibt sich der Vorteil, dass ein Nutzer in jedem Fall ein Feedback zum Start eines Ladevorgangs bekommen kann, wenn er den Ladestecker in die Ladebuchse des Kraftfahrzeugs gesteckt hat, ohne eine Initialisierungszeit oder einen Teil einer Initialisierungszeit des Ladekommunikationschip abwarten zu müssen.

Nicht im Schutzumfang der Ansprüche liegt eine Vorgehensweise, bei der der Ladekommunikationschip aktiviert wird, wenn ein Nutzer einen entsprechenden Steuervorgang vornimmt. Dazu kann der Nutzer zum Beispiel eine Applikation eines Mobilfunkgerätes, das mit einem Bordcomputer des Kraftfahrzeugs verbunden ist, nutzen oder eine entsprechende Eingabe an einem Informationssystem des Kraftfahrzeugs tätigen, wobei jeweils die Eingabe der Steuervorgang zum Aktivieren des Ladekommunikationschips ist. Bei einer entsprechenden Eingabe erzeugt die Applikation des Mobilfunkgerätes oder ein Bordcomputer, der mit dem Informationssystem des Kraftfahrzeugs verbunden ist, ein Aktivierungssignal. Wenn der Ladekommunikationschip deaktiviert war, wird er durch das Aktivierungssignal aktiviert und bleibt bei einem Öffnen der Ladeklappe aktiviert. Der Vorteil daran ist, dass ein Nutzer die Aktivierung des Ladekommunikationschip aktiv und kontrolliert beeinflussen kann und den Ladekommunikationschip dann aktivieren kann, wenn er ihn beispielsweise für einen Ladevorgang benötigt.

Ebenfalls nicht im Schutzbereich der Ansprüche liegt eine Vorgehensweise, bei der der Ladekommunikationschip bereits dann zeitlich vor dem Öffnen der Ladeklappe aktiviert wird, wenn ein Funkschlüssel des elektrischen Kraftfahrzeugs auf einer Ladeklappenseite des elektrischen Kraftfahrzeugs detektiert wird. Die Ladeklappenseite ist die Seite, an der die Ladeklappe des Kraftfahrzeugs bereitgestellt ist oder angebracht ist. Beispielsweise kann ein Bordcomputer des Kraftfahrzeugs so ausgestaltet sein, dass er eine Position des Funkschlüssels bezüglich des Kraftfahrzeugs erkennen kann und zwar wenigstens so gut, dass erkannt wird auf welcher Seite des Kraftfahrzeugs der Funkschlüssel ist. In dem Fall, in dem der Nutzer mit dem Funkschlüssel auf die Ladeklappenseite geht, ist es wahrscheinlich, dass der Nutzer einen Ladevorgang starten will. Wenn in einem solchen Fall der Ladekommunikationschip deaktiviert ist, wird der Ladekommunikationschip aktiviert, wobei er aktiviert bleibt, wenn die Ladeklappe geöffnet wird. Der Vorteil ist auch hier, dass der Nutzer ein Feedback bekommen kann, auch wenn er den Ladestecker besonders schnell nach dem Öffnen der Ladeklappe in die Ladebuchse einsteckt.

Gemäß einem ersten Aspekt der Erfindung ist vorgesehen, dass der Ladekommunikationschip dann wieder deaktiviert wird, falls nach dem Aktivieren des Ladekommunikationschips für eine vorbestimmte Zeitdauer kein Ladevorgang stattfindet. Wenn beispielsweise ein Nutzer die Ladeklappe öffnet, aber kein Ladekabel einsteckt und somit keinen Ladevorgang startet oder starten will, wird nach der vorbestimmten Zeitdauer der Ladekommunikationschip deaktiviert. Die vorbestimmte Zeitdauer kann eine Zeitdauer sein, innerhalb derer ein Nutzer normalerweise ein Ladekabel in eine Ladebuchse des Kraftfahrzeugs stecken würde. Die Zeitdauer kann also beispielsweise eine Minute betragen, insbesondere weniger als eine Minute. Der Ladekommunikationschip wird gemäß der Weiterbildung auch dann deaktiviert, wenn zunächst ein Ladevorgang erfolgreich gestartet wurde und nachdem der Ladevorgang abgeschlossen ist kein Ladevorgang mehr stattfindet. In diesem Fall wird der Ladekommunikationschip also dann deaktiviert, wenn nach einem abgeschlossenen Ladevorgang die vorbestimmte Zeitdauer vergangen ist. Der Vorteil daran ist, dass der Ladekommunikationschip nicht aktiviert bleibt, wenn er nicht benötigt wird. Dadurch werden Probleme wie unnötige Alterungserscheinungen des Ladekommunikationschips oder elektromagnetische Störungen im Kraftfahrzeug durch den Ladekommunikationschip während einer unnötigen Zeitdauer vermieden.

Ebenfalls gemäß dem ersten Aspekt der Erfindung ist vorgesehen, dass der Ladekommunikationschip nur dann aktiviert bleibt, falls er für einen bestimmten Ladevorgang oder eine bestimmte Art oder Modalität eines Ladens benötigt wird. Wenn der Ladevorgang mit einer Lademodalität stattfindet, bei der eine Steuerung mittels des Ladekommunikationschips benötigt ist, bleibt der Ladekommunikationschip zumindest während des Ladevorgangs aktiviert. Eine solche erste Lademodalität ist zum Beispiel bei einer DC-Ladung gegeben. Bei einer Lademodalität, welche eine Steuerung mittels des Ladekommunikationschips nicht benötigt, wird der Ladekommunikationschip nach einer vorbestimmten Zeitdauer wieder deaktiviert, um beispielsweise Probleme bezüglich elektromagnetischer Störstrahlung zu vermeiden. Eine solche zweite Lademodalität ist beispielsweise ein AC-Ladevorgang. Die vorbestimmte Zeitdauer kann in diesem Fall insbesondere sehr kurz sein, beispielsweise weniger als zwei Sekunden, da nach einem gestarteten Ladevorgang mit einer zweiten Lademodalität unmittelbar nach dem Start dieses Ladevorgangs klar ist, dass der Ladekommunikationschip in dieser Situation nicht benötigt wird. Dadurch, dass die vorbestimmte Zeitdauer sehr gering ist, ergibt sich der Vorteil, dass beispielsweise Probleme bezüglich elektromagnetischer Störstrahlung minimiert werden.

Gemäß einem zweiten Aspekt der vorliegenden Erfindung ist vorgesehen, dass der Ladekommunikationschip dann deaktiviert wird, wenn die Ladeklappe geschlossen wird. Beispielsweise kann ein Nutzer direkt nach dem Beenden des Ladevorgangs, zum Beispiel innerhalb einer Sekunde nach dem Beenden des Ladevorgangs, den Ladestecker aus der Ladebuchse ziehen und die Ladeklappe schließen. Dadurch ergibt sich hier der Vorteil, dass der Ladekommunikationschip direkt nach dem Beenden des Ladevorgangs wieder deaktiviert wird, um die oben beschriebenen Probleme zu vermeiden. Ein Schließen der Ladeklappe wird fachmännisch mittels des Erkennungssignals der Erkennungseinrichtung erkannt.

Die Erfindung betrifft auch ein elektrisches Kraftfahrzeug mit einer elektrischen Ladesteuervorrichtung mit einem Ladekommunikationschip. Das elektrische Kraftfahrzeug weist weiterhin eine Erkennungseinrichtung auf, welche ausgestaltet ist, einen Öffnungszustand einer Ladeklappe der elektrischen Ladesteuervorrichtung zu erkennen. Die Erkennungseinrichtung ist dazu ausgestaltet, den Öffnungszustand in einem korrespondierenden Erkennungssignal auszugeben, wobei das Erkennungssignal beispielsweise einen ersten Wert aufweist, wenn die Ladeklappe geschlossen ist und einen zweiten Wert aufweist, wenn die Ladeklappe geöffnet ist. Ein Steuergerät des elektrischen Kraftfahrzeugs ist dazu ausgestaltet, nach einem erfindungsgemäßen Verfahren in Abhängigkeit des Erkennungssignals eine Aktivierung des Ladekommunikationschips zu steuern. Beispielsweise aktiviert das Steuergerät den Ladekommunikationschip dann, wenn dieser deaktiviert war und der Wert des Erkennungssignals vom ersten Wert auf den zweiten Wert wechselt.

Zu der Erfindung gehören auch Weiterbildungen des erfindungsgemäßen elektrischen Kraftfahrzeugs, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen elektrischen Kraftfahrzeugs hier nicht noch einmal beschrieben.

Im Folgenden ist ein Ausführungsbeispiel der Erfindung beschrieben. Hierzu zeigt:
- Fig. 1: eine schematische Ladesteuervorrichtung eines Kraftfahrzeugs mit einer Ladeklappe; und
- Fig. 2: ein schematisches Blockschaltbild des erfindungsgemäßen Verfahrens.

Bei den im Folgenden erläuterten Ausführungsbeispielen handelt es sich je um eine bevorzugte Ausführungsform der Erfindung. Bei den Ausführungsbeispielen stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die je beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

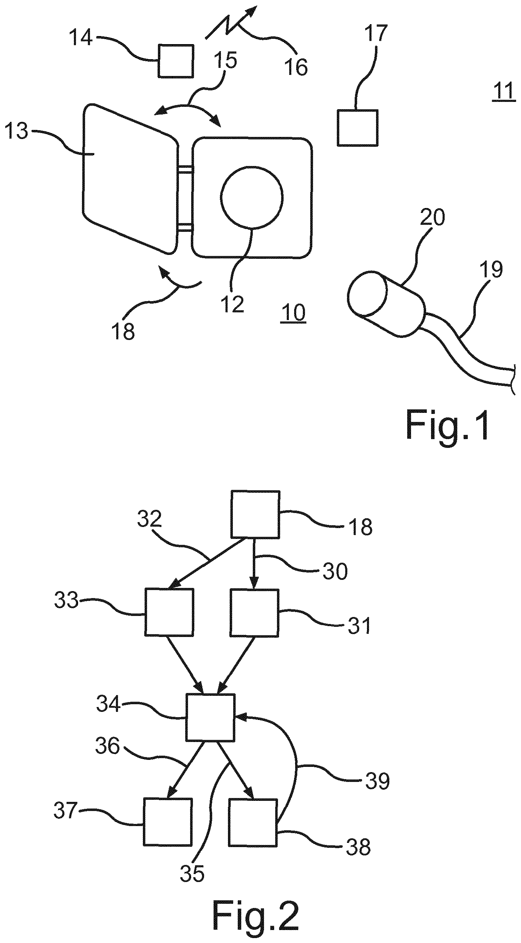

Fig. 1 zeigt in schematischer Darstellung eine Ladesteuervorrichtung 10 eines Kraftfahrzeugs 11. Die Ladesteuervorrichtung 10 weist eine Ladebuchse 12 mit einer Ladeklappe 13 auf. Eine Erkennungseinrichtung 14 ist dazu ausgestaltet, einen Öffnungszustand 15 der Ladeklappe 13 zu erkennen und in einem Erkennungssignal 16 auszugeben. Auf Grundlage des Erkennungssignal 16 kann ein Ladekommunikationschip 17 der Ladesteuervorrichtung 10 aktiviert oder deaktiviert werden. Die Ladeklappe 13 ist in einem geöffneten Öffnungszustand 15 gezeigt, der durch ein Öffnen 18 der Ladeklappe 13 erreicht wird. In Fig. 1 ist weiterhin ein Ladekabel 19 mit einem Ladestecker 20 gezeigt.

Fig. 2 zeigt ein schematisches Blockschaltbild des erfindungsgemäßen Verfahrens. Dabei führt ein Öffnen 18 der Ladeklappe 13 bei einem deaktivierten Zustand 30 des Ladekommunikationschips 17 zu einem Aktivieren 31 des Ladekommunikationschips 17. Bei einem aktivierten Zustand 32 führt das Öffnen 18 der Ladeklappe 13 zu einem Beibehalten 33 des aktivierten Zustands 32. Nach dem Aktivieren 31 oder Beibehalten eines aktivierten Zustands 30 wird eine vorbestimmte Zeitdauer 34 abgewartet, und nach Ablauf der vorbestimmten Zeitdauer 34 geprüft, ob ein Ladevorgang 35 vom Ladekommunikationschip 17 gesteuert wird oder ob eine Nichtbenutzung 36 des Ladekommunikationschips 17 vorliegt. Bei einer Nichtbenutzung 36 folgt ein Deaktivieren 37 des Ladekommunikationschips. Bei einem Ladevorgang 35 folgt ein Aktiviertbleiben 38 des Ladekommunikationschips 17 und ein Wiederholen 39 des Wartens, wozu wiederum die vorbestimmte Zeitdauer 34 abgewartet wird.

In einem Ausführungsbeispiel will ein Nutzer des Kraftfahrzeugs 11 eine Batterie des Kraftfahrzeugs 11 laden. Dazu steckt er den Ladestecker 20 des Ladekabels 19 einer nicht dargestellten Ladesäule in die Ladebuchse 12 der Ladesteuervorrichtung 10. Die Ladebuchse 12 ist mit der Ladeklappe 13 versehen. In einem Betriebszustand, etwa beim Fahren des Kraftfahrzeugs, ist diese Ladeklappe 13 in bekannter Weise geschlossen, so dass die Ladebuchse 12 nicht zugänglich ist. Die Erkennungseinrichtung 14 erzeugt in diesem Fall das Erkennungssignal 16 mit einem ersten Wert. Durch den ersten Wert des Erkennungssignals 16 ist somit der geschlossene Zustand der Ladeklappe 13 bekannt, der Öffnungszustand 15 der Ladeklappe 13 ist in diesem Fall also geschlossen. Um den Ladestecker 20 in die Ladebuchse 12 stecken zu können, muss ein Nutzer folglich die Ladeklappe 13 öffnen. Im Moment eines Öffnens 18 erkennt die Erkennungseinrichtung 14 einen neuen Öffnungszustand 15, der nun ein geöffneter Öffnungszustand 15 ist. In diesem Fall weist das Erkennungssignal 16 zum Beispiel einen zweiten Wert auf. Wenn der Wert des Erkennungssignals 16 vom ersten Wert auf den zweiten Wert wechselt, wird der Ladekommunikationschip 17 aktiviert. Der Ladekommunikationschip 17 wird also dann aktiviert, wenn ein Nutzer, der etwa einen Ladevorgang vornehmen möchte, die Ladeklappe 13 aus einem geschlossenen Öffnungszustand 15 öffnet und somit in einen geöffneten Öffnungszustand 15 führt. Der Ladekommunikationschip 17 wird also beim Öffnen 18 der Ladeklappe 13 aktiviert und nicht erst beim Einstecken des Ladesteckers 20.

Im schematischen Blockdiagramm in Fig. 2 ist gezeigt, wie beim Öffnen 18 der Ladeklappe 13 verfahren wird, falls der Ladekommunikationschip 17 in einem deaktivierten Zustand 30 oder in einem aktivierten Zustand 32 ist. Wenn der Ladekommunikationschip 17 beim Öffnen 18 der Ladeklappe 13 in einem deaktivierten Zustand 30 ist, erfolgt ein Aktivieren 31 des Ladekommunikationschips 17. Falls der Ladekommunikationschip 17 bereits beim Öffnen 18 in einem aktivierten Zustand 32 war, erfolgt ein Beibehalten 33 dieses aktivierten Zustands 32. Nach einem Öffnen 18 der Ladeklappe 13 ist der Ladekommunikationschip 17 also in beiden Fällen aktiviert. Der Fall, dass der Ladekommunikationschip 17 bereits beim Öffnen 18 in einem aktivierten Zustand 32 ist, kann dadurch eintreten, dass dieser bereits dadurch aktiviert wurde, dass ein Nutzer ihn durch etwa einen Bedienvorgang in einer Handy-App oder mittels einer Funktion eines Bordcomputers des Kraftfahrzeugs aktiviert hat oder dadurch, dass das Kraftfahrzeug sich automatisch mit der Ladesäule, die das Ladekabel 19 mit dem Ladestecker 20 zur Verfügung stellt, verbunden hat oder dadurch, dass der Nutzer, der den Ladevorgang vornehmen möchte mit einem Funkschlüssel auf die Seite des Kraftfahrzeugs gegangen ist, auf der die Ladesteuervorrichtung mit der Ladeklappe 13 bereitgestellt ist.

Wenn der Ladekommunikationschip 17 aktiv ist, erfolgt ein Warten für eine vorbestimmte Zeitdauer 34. Diese vorbestimmte Zeitdauer ist etwa die Zeitdauer, die normalerweise nach dem Öffnen der Ladeklappe 13 vergeht bis der Nutzer den Ladestecker 20 in die Ladebuchse 12 gesteckt hat, um einen Ladevorgang 35 zu starten. Wenn der Ladevorgang 35 innerhalb der vorbestimmten Zeitdauer 34 startet, folgt ein Aktiviertbleiben 38 des Ladekommunikationschips 17. Wenn der Ladekommunikationschip 17 aktiviert bleibt, folgt ein Wiederholen 39 des Wartens, wozu wiederum die vorbestimmte Zeitdauer 34 abgewartet wird, sodass sich eine Wiederholschleife ergibt. Im Fall, dass der Ladevorgang 35 nach einer Wiederholung 39 beendet ist, wird eine Nichtbenutzung 36 des Ladekommunikationschips 17 erkannt und es folgt ein Deaktivieren 37 des Ladekommunikationschips 17. Wenn nach einem solchen Deaktivieren 37 der Ladestecker 20 aus der Ladebuchse 12 gezogen wird und die Ladeklappe 13 geschlossen wird, bleibt der Ladekommunikationschip 17 weiterhin deaktiviert. Er kann erneut dadurch aktiviert werden, dass die Ladeklappe 13 wieder geöffnet wird.

Das Ausführungsbeispiel zeigt also, wie zur Behebung von Kommunikationsproblemen ein Ladekommunikationschip, etwa ein PLC-Kommunikationschip, welcher für eine Ladekommunikation zu einer Ladesäule fahrzeugseitig benötigt wird, abgeschaltet wird, sofern kein Ladestecker erkannt wird oder ein Ladevorgang abgeschlossen ist. Erfindungsgemäß wird der Ladekommunikationschip vor einem Ladevorgang intelligent gestartet und initialisiert. Dafür erfolgt eine frühe Aktivierung des Kommunikationschips dadurch, dass dieser aktiviert wird, sobald eine Ladeklappe geöffnet wird. Der Vorteil dabei ist, dass eine Ladeverzögerung durch die relativ hohe Initialisierungszeit des Kommunikationschips, etwa 7 Sekunden, vermieden wird und der Nutzer nicht diese 7 Sekunden lang warten muss, bis ein positives Feedback über einen Ladestart gemeldet werden kann. Der Kommunikationschip wird also abhängig vom Öffnungszustand der Ladeklappe aktiviert oder deaktiviert, bzw. ein für die Ladekommunikation zuständiges Steuergerät startet, bevor der Ladestecker gesteckt wird. Wenn nach dem Stecken des Ladesteckers erkannt wird, dass der Kommunikationschip nicht benötigt wird, wird der Ladekommunikationschip unabhängig vom Ladeklappenzustand wieder abgeschaltet. Wenn der Ladekommunikationschip jedoch benötigt wird, wird der jeweilige Ladevorgang möglichst schnell gestartet und eine Wartezeit vermieden. Die Aktivierung des Ladekommunikationschips erfolgt also durch einer Ladeklappenerkennung, die als initialer Trigger dient. Für den Fall, dass die Ladeklappe dauerhaft als geöffnet erkannt wird, ohne dass ein Ladestecker gesteckt wird, erfolgt eine Abschaltung des Chips nach einem definierten Time-out.

Insgesamt zeigt das Beispiel, wie durch die Erfindung eine Zeitdauer reduziert wird, die zwischen einem Einstecken eines Ladesteckers für einen Ladevorgang und einem daraus folgenden Feedback für einen Nutzer, das einen erfolgreichen Start des Ladevorgangs beinhaltet, besteht. Dadurch, dass ein Ladekommunikationschip in einer intelligenten Weise bereits vor dem Beginn eines Ladevorgangs aktiviert wird, wird eine unnötige Wartedauer für den Nutzer vermieden und gleichzeitig eine unnötige Aktivität des Ladekommunikationschip vermieden, durch die Alterungserscheinungen am Kommunikationschip auftreten können oder elektromagnetische Störstrahlung auftreten könnten.

### Bezugszeichenliste

- (10): Ladesteuervorrichtung
- (11): Kraftfahrzeug
- (12): Ladebuchse
- (13): Ladeklappe
- (14): Erkennungseinrichtung
- (15): Öffnungszustand
- (16): Erkennungssignal
- (17): Ladekommunikationschip
- (18): Öffnen
- (19): Ladekabel
- (20): Ladestecker
- (30): Zustand
- (31): Aktivieren
- (32): Zustand
- (33): Beibehalten
- (34): Zeitdauer
- (35): Ladevorgang
- (36): Nichtbenutzung
- (37): Deaktivieren
- (38): Aktiviertbleiben
- (39): Wiederholen

## Patentansprüche

1. Verfahren zum Betreiben einer elektrischen Ladesteuervorrichtung (10) eines elektrischen Kraftfahrzeugs (11), wobei, falls zum Laden zumindest einer Batterie des elektrischen Kraftfahrzeugs (11) ein Ladekabel (19) mit einem Ladestecker (20) in eine eine Ladeklappe (13) aufweisende Ladebuchse (12) der elektrischen Ladesteuervorrichtung (10) eingesteckt wird, zumindest ein Ladevorgang mittels eines Ladekommunikationschips (17) der elektrischen Ladesteuerungsvorrichtung (10) gesteuert wird, wobei bei deaktiviertem Ladekommunikationschip (17) der Ladekommunikationschip (17) dann aus einem deaktivierten Zustand (30) aktiviert wird, wenn die Ladeklappe (13) geöffnet wird,
**dadurch gekennzeichnet,**
**dass** der Ladekommunikationschip (17) nur dann aktiviert bleibt, falls der Ladevorgang (15) mit einer Lademodalität stattfindet, bei der eine Steuerung mittels des Ladekommunikationschips (17) benötigt ist, und andernfalls der Ladekommunikationschip (17) nach einer vorbestimmten Zeitdauer wieder deaktiviert wird.

2. Verfahren zum Betreiben einer elektrischen Ladesteuervorrichtung (10) eines elektrischen Kraftfahrzeugs (11), wobei, falls zum Laden zumindest einer Batterie des elektrischen Kraftfahrzeugs (11) ein Ladekabel (19) mit einem Ladestecker (20) in eine eine Ladeklappe (13) aufweisende Ladebuchse (12) der elektrischen Ladesteuervorrichtung (10) eingesteckt wird, zumindest ein Ladevorgang mittels eines Ladekommunikationschips (17) der elektrischen Ladesteuerungsvorrichtung (10) gesteuert wird, wobei bei deaktiviertem Ladekommunikationschip (17) der Ladekommunikationschip (17) dann aus einem deaktivierten Zustand (30) aktiviert wird, wenn die Ladeklappe (13) geöffnet wird, wobei der Ladekommunikationschip (17) deaktiviert wird, falls nach dem Aktivieren (31) für eine vorbestimmte Zeitdauer (34) kein Ladevorgang (35) stattfindet,
**dadurch gekennzeichnet,**
**dass** ein Öffnen der Ladeklappe (13) mittels einer dafür vorgesehenen Erkennungseinrichtung (14) erkannt wird, wobei diese einen Öffnungszustand der Ladeklappe (13) in zumindest einem erzeugten Erkennungssignal (16) ausgibt, wobei ein Schließen der Ladeklappe (13) mittels des Erkennungssignals (16) der Erkennungseinrichtung (14) erkannt wird, wobei der Ladekommunikationschip (17) deaktiviert wird, wenn die Ladeklappe (13) geschlossen wird, wenn der Ladekommunikationschip (17) aktiviert ist.

3. Elektrisches Kraftfahrzeug (11) mit einer elektrischen Ladesteuervorrichtung (10) mit einem Ladekommunikationschip (17) und einer Erkennungseinrichtung (14) zum Erkennen eines Öffnungszustandes (15) einer Ladeklappe (13) einer Ladebuchse (12) der elektrischen Ladesteuervorrichtung (10), wobei die Erkennungseinrichtung (14) dazu ausgestaltet ist, den Öffnungszustand (15) der Ladeklappe (13) in einem korrespondierenden Erkennungssignal (16) auszugeben,
**dadurch gekennzeichnet, dass**
zumindest ein Steuergerät des Kraftfahrzeugs (11) dazu ausgestaltet ist, nach einem Verfahren der vorhergehenden Ansprüche in Abhängigkeit des Erkennungssignals (16) eine Aktivierung des Ladekommunikationschips (17) zu steuern.

## Claims

1. Method for operating an electric charging control apparatus (10) of an electric motor vehicle (11), wherein, if a charging cable (19) having a charging plug (20) is plugged into a charging socket (12) of the electric charging control apparatus (10), said charging socket having a charging flap (13), for charging at least one battery of the electric motor vehicle (11), at least one charging process is controlled by means of a charging communication chip (17) of the electric charging control apparatus (10), wherein, in the case of a deactivated charging communication chip (17), the charging communication chip (17) is activated from a deactivated state (30) when the charging flap (13) is opened,
**characterized**
**in that** the charging communication chip (17) remains activated only if the charging process (15) takes place with a charging modality in which control by means of the charging communication chip (17) is required, and otherwise the charging communication chip (17) is deactivated again after a predetermined duration.

2. Method for operating an electric charging control apparatus (10) of an electric motor vehicle (11), wherein, if a charging cable (19) having a charging plug (20) is plugged into a charging socket (12) of the electric charging control apparatus (10), said charging socket having a charging flap (13), for charging at least one battery of the electric motor vehicle (11), at least one charging process is controlled by means of a charging communication chip (17) of the electric charging control apparatus (10), wherein, in the case of a deactivated charging communication chip (17), the charging communication chip (17) is activated from a deactivated state (30) when the charging flap (13) is opened, wherein the charging communication chip (17) is deactivated if no charging process (35) takes place for a predetermined duration (34) after activation (31),
**characterized**
**in that** opening of the charging flap (13) is detected by means of a detection device (14) provided for this purpose, wherein this detection device outputs an opening state of the charging flap (13) in at least one generated detection signal (16), wherein closing of the charging flap (13) is detected by means of the detection signal (16) from the detection device (14), wherein the charging communication chip (17), when the charging communication chip (17) is activated, is deactivated when the charging flap (13) is closed.

3. Electric motor vehicle (11) having an electric charging control apparatus (10) having a charging communication chip (17) and a detection device (14) for detecting an opening state (15) of a charging flap (13) of a charging socket (12) of the electric charging control apparatus (10), wherein the detection device (14) is configured to output the opening state (15) of the charging flap (13) in a corresponding detection signal (16),
**characterized in that**
at least one control unit of the motor vehicle (11) is configured to control activation of the charging communication chip (17) on the basis of the detection signal (16) according to a method of the preceding claims.

## Revendications

1. Procédé permettant de faire fonctionner un dispositif de commande de charge électrique (10) d'un véhicule automobile électrique (11), dans lequel, si pour charger au moins une batterie du véhicule automobile électrique (11), un câble de charge (19) pourvu d'un connecteur de charge (20) est inséré dans une prise de charge (12) présentant une trappe de charge (13) du dispositif de commande de charge électrique (10), au moins un processus de charge est commandé au moyen d'une puce de communication de charge (17) du dispositif de commande de charge électrique (10), dans lequel, si la puce de communication de charge (17) est désactivée, la puce de communication de charge (17) est alors activée à partir d'un état désactivé (30) si la trappe de charge (13) est ouverte,
**caractérisé en ce que** la puce de communication de charge (17) ne reste activée que si le processus de charge (15) a lieu dans un mode de charge dans lequel une commande au moyen de la puce de communication de charge (17) est nécessaire, et sinon la puce de communication de charge (17) est à nouveau désactivée après un délai prédéterminé.

2. Procédé permettant de faire fonctionner un dispositif de commande de charge électrique (10) d'un véhicule automobile électrique (11), dans lequel, si pour charger au moins une batterie du véhicule automobile électrique (11), un câble de charge (19) pourvu d'un connecteur de charge (20) est inséré dans une prise de charge (12) présentant une trappe de charge (13) du dispositif de commande de charge électrique (10), au moins un processus de charge est commandé au moyen d'une puce de communication de charge (17) du dispositif de commande de charge électrique (10), dans lequel, si la puce de communication de charge (17) est désactivée, la puce de communication de charge (17) est alors activée à partir d'un état désactivé (30) si la trappe de charge (13) est ouverte, dans lequel la puce de communication de charge (17) est désactivée si aucun processus de charge (35) n'a lieu pendant un délai prédéterminé (34) après l'activation (31),
**caractérisé en ce qu'**une ouverture de la trappe de charge (13) est identifiée au moyen d'un dispositif d'identification (14) prévu à cet effet, celui-ci délivrant un état d'ouverture de la trappe de charge (13) par au moins un signal d'identification (16) généré, dans lequel une fermeture de la trappe de charge (13) est identifiée au moyen du signal d'identification (16) du dispositif d'identification (14), la puce de communication de charge (17) étant désactivée si la trappe de charge (13) est fermée si la puce de communication de charge (17) est activée.

3. Véhicule automobile électrique (11), comprenant un dispositif de commande de charge électrique (10) pourvu d'une puce de communication de charge (17) et d'un dispositif d'identification (14) pour identifier un état d'ouverture (15) d'une trappe de charge (13) d'une prise de charge (12) du dispositif de commande de charge électrique (10), dans lequel le dispositif d'identification (14) est configuré pour délivrer l'état d'ouverture (15) de la trappe de charge (13) par un signal d'identification correspondant (16),
**caractérisé en ce qu'**au moins un appareil de commande du véhicule automobile (11) est configuré pour commander une activation de la puce de communication de charge (17) selon un procédé des revendications précédentes en fonction du signal d'identification (16) .
